# EUROPEAN PATENT APPLICATION

(11) **EP 2 503 482 A1**
(43) Date of publication of application: **26.09.2012**
(21) Application number: 11305325.0
(22) Date of filing: 23.03.2011
(51) Int. Cl.: G06F 21/00

(54) **Electronic device with flash memory component**

(71) Applicant: ST-Ericsson SA, 1228 Plan-les-Ouates (CH)
(72) Inventor: Sibert, Hervé, 72000, LE MANS (FR)
(74) Representative: Cabinet Plasseraud

(57) **Abstract**

Electronic device (1) comprising a chipset component (2) and a flash memory component (3), the said chipset component being associated with an identifier, the said chipset component comprising a monotonic counter (21) and being configured to:
- derive a key from the identifier and a current value of the monotonic counter, by using a cryptographic key derivation function,
- build a provisioning command related to the key,
- send the provisioning command to the flash memory component, and
- use the key to manage a secure storage area in the flash memory component.

## Description

### TECHNICAL FIELD

Embodiments of the present invention generally relate to data security, and more particularly to security of data stores in a flash memory component.

### BACKGROUND

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

It is usual to unsolder a flash memory component from a board and resolder a new one in care centers or during development, for instance because the flash memory component is damaged.

It is sometimes a requirement that data retrieved from the damaged flash memory component can be loaded to the new flash memory component and are still usable, as long as a chipset component of the board has not been changed. Therefore, such data are either stored in plain form, or bound to the chipset component, but not to the flash memory component.

However, for some data, it might be a risk to allow doing so. For instance, if the flash memory component embeds a trusted e-wallet which stores units (tickets, coins), one may copy it to another flash memory component and, by swapping the two flash memory components with the same chipset component once one wallet is empty, one would be able to spend twice each unit. More generally, any storage of units on the flash memory component whose number shall be trusted might be similarly sensitive.

For real electronic cash (i.e. electronic coins), the issue may be solved by associating to each unit a unique serial number, determined during the generation of the cash by the issuer, for instance the bank. This enables detecting double spending of coins.

A drawback to this solution is that detection can only be performed after a misuse has been performed, and relies on entities, external to the device.

Another possibility is to use flash memory components that are already provisioned each with a unique, trusted identifier (ID). This enables the chipset component to bind the units stored in flash memory component with the flash memory component, or with the combination of the flash memory component and the chipset component, by using well-known techniques like Hash-based Message Authentication Codes (HMACs).

A drawback to this solution is that the flash memory components must be pre-provisioned with unique IDs.

US-2010/058306 describes a system where firmware updates at an information handling system flash memory device, such as provisioning information stored on a USB (Universal Serial Bus) device, are securely performed by using a buffer memory and a secured code. An application running on a CPU (Central Processing Unit) generates a firmware update and a security code, such as a ciphered hash code based on the firmware update, stores the firmware update and security code in a buffer, and informs a management processor of the update. The management processor analyzes the firmware update to authorize copying of the update from the buffer to the flash memory device. For instance, the management processor creates the security code from the firmware update and compares the created code with the security code stored in the buffer to validate the firmware update.

CN-101710307 describes a method for protecting data security of digital equipment. Stored data is taken as plaintext encrypted content and a 64bit uniquely-identified serial number of a key chip is taken as an encrypted key. When system software is in the first boot-strap, the encrypted content is read from a specific memory address and encrypted, and the encrypted content is rewritten into the same memory address space.

US-6457126 describes a storage device having a flash memory, a controller and a second ROM (Read-Only Memory). In the flash memory, a data key is stored, which is a key unique to each storage device. In the second ROM, a system key is stored which is an encrypting key common to storage devices. The controller, when writing data, encrypts the data with the data and system keys and writes the encrypted data in the flash memory, and when reading data, decrypts the data with the data and system keys to output the decrypted data.

CN-101494645 describes a device to download authentication onto flash memory program, the device comprising a hardware unique key, a register storing a customer identity (ID) and a message authentication code (MAC) generation unit. The MAC generation unit acquires a root key corresponding to the hardware unique key and the customer ID, and generates a MAC for the flash program using the acquired root key. The content of the register is locked to avoid modification of the stored customer ID until the next system reset.

There is a need for improved methods and devices for preventing cloning of some data from one flash memory component to another even if both are used with the same chipset component.

Embodiments of the invention will improve the situation.

### SUMMARY

To address these needs, a first aspect of the present invention relates to an electronic device comprising a chipset component and a flash memory component, the said chipset component being associated with an identifier, the said chipset component comprising a monotonic counter and being configured to:
- derive a key from the identifier and a current value of the monotonic counter, by using a cryptographic key derivation function,
- build a provisioning command related to the key,
- send the provisioning command to the flash memory component, and
- use the key to manage a secure storage area in the flash memory component.

Embodiments of the invention aim to avoid cloning of some data from one flash memory component to another even if both are used with the same chipset component.

The chipset component may further be configured to increase the counter value before deriving the key.

The chipset component may comprise a single software or hardware function to increase the counter value and derive the key.

The chipset component may further be configured to regenerate the key using the identifier and the current value of the monotonic counter, and to use the regenerated key to build commands to communicate with the flash memory component.

The chipset component may be configured to receive, from the flash memory component, a one-time key, the provisioning command being related to the key and the one-time key.

A second aspect of the present invention relates to a method for preventing cloning of a flash memory component, comprising a step of soldering a flash memory component to an electronic device comprising a chipset component, the said chipset component being associated to an identifier and comprising a monotonic counter,
the method further comprising steps of, at the chipset component:
- deriving a key from the identifier and a current value of the monotonic counter, by using a cryptographic key derivation function,
- building a provisioning command related to the key,
- sending the provisioning command to the flash memory component,
- using the key to manage a secure storage area in the flash memory component.

The method may comprise a step of increasing the counter value before deriving the key.

The method may comprise a step of regenerating the key using the identifier and the current value of the monotonic counter, and using the regenerated key to build commands to communicate with the flash memory component.

The method may comprise a step of receiving at the chipset component, from the flash memory component, a one-time key, the provisioning command being related to the key and the one-time key.

A third aspect of the present invention relates to a computer program product comprising a computer readable medium, having thereon a computer program comprising program instructions, the computer program being loadable into a data-processing unit and adapted to cause the data-processing unit to carry out the steps of any of the method according to the second aspect when the computer program is run by the data-processing unit.

### BRIEF DESCRIPTION OF THE DRAWINGS

The present invention is illustrated by way of example, and not by way of limitation, in the figures of the accompanying drawings, in which like reference numerals refer to similar elements and in which:
- Fig.1 is a schematic block diagram of an electronic board according to some embodiments of the invention;
- Fig.2 is a flow chart showing steps of a method for preventing cloning of a flash memory component of the electronic board according to embodiments of the invention;
- Fig.3 is a schematic block diagram of an electronic board according to other embodiments of the invention; and
- Fig.4 is a flow chart showing steps of a method for preventing cloning of a flash memory component of the electronic board according to other embodiments of the invention.

### DESCRIPTION OF EMBODIMENTS

Embodiments of the invention deal with the problem of preventing cloning of some data from one flash memory component to another even if both are used with the same chipset component.

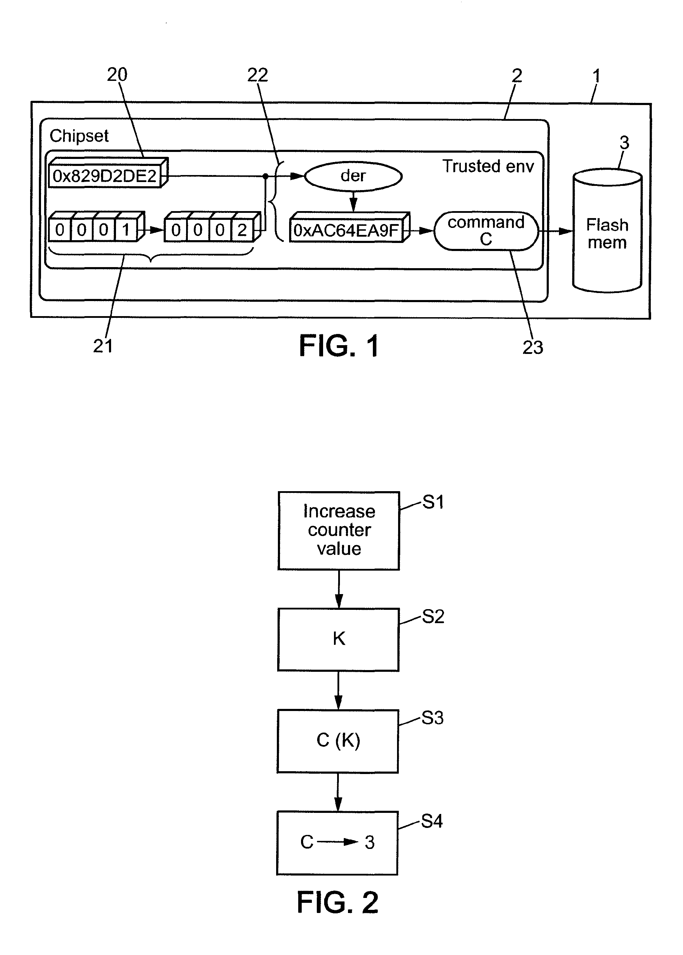

**Fig.1** shows an electronic board 1 according to some embodiments of the invention. The electronic board 1 comprises a chipset component 2 and a flash memory component 3.

The chipset component 2 embeds a hardware unique identifier (ID) and/or key 20, called credentials. The chipset component 2 comprises a monotonic counter block 21. The monotonic counter 21 may use, for example, One-Time-Programmable memory bits.

The chipset component 2 further comprises a derivation block 22 configured to derive a key K from the chipset credentials and the current value of the monotonic counter 21.

The chipset component 2 further comprises a command block 23 configured to build a key provisioning command C, and to send the command C to a flash memory controller of the flash memory component 3.

The flash memory component 3 is configured to allow an external key to be securely provisioned, so that the key is not readable from the flash memory component 3 or during provisioning, but so that an external entity that knows the key can check whether it is the one that has been provisioned.

The protection against reading the key once it has been provisioned is, for instance, part of the Replay-Protection Memory Block (RPMB) functionality present in the eMMC (v4.4. and beyond), UFS, LPDDR2-NVM standards. It is also part of the MC-Ex functionality of SD cards. The RPMB is a protected block whose features enable detection of replay on the same flash part. It does not prevent replay on another flash part.

**Fig.2** shows steps of a method for preventing cloning of a flash memory component, according to some embodiments of the invention. The method is executed by the chipset component 2, for example when a new flash memory component 3 has just been soldered to the electronic board 1.

Steps S1 to S3 are performed in a controlled environment. The result of steps S2 and S3 is not available outside the chipset component 2 to a nonlegitimate entity, in order to avoid replaying a provisioning command C to the flash memory component 3.

In step S1, the counter block 21 increases the counter value.

In step S2, the derivation block 22 derives a key K from the chipset credentials and the current value of the counter 21, using a proper cryptographic key derivation function such as PBKDF2 defined in the PKCS #5 v2.1 standard.

Steps S1 and S2 can be bundled in a single software or hardware function, so as to make sure that the chipset component 2 will never perform derivation twice with the same counter value.

Alternatively, performing step S2 without prior performing step S1 may be authorized in a special mode of the chipset component 2, for instance during initial production. The controlled environment may set this mode by looking at some field in OTP (One-Time Password) memory, or after receiving and verifying a special certificate signed with a dedicated key.

In step S3, the command block 23 builds a key provisioning command C for key K, e.g. as specified in eMMC 4.4 specification.

In step S4, the command block 23 sends the command C to the flash memory controller of the flash memory component 3. The command C is sent directly to the flash memory controller, not passing through any open environment like Linux. For instance, the secure environment in which the key K is computed also embeds a flash driver and directly accesses the flash controller.

Once the provisioning is done, the chipset component 2 and the flash memory component 3 share the same key K. In other words, the chipset component 2 choose a unique key K for the flash memory component 3, in such a way that this key K is bound both to the chipset component 2 and the flash memory component 3.

The key K is known to the flash memory component 3 as it is stored in it. The key K can be regenerated by the chipset component 2, using its credentials and the current counter value, so there is no need to store it in the chipset component 2.

The key K may then be used by the chipset component 2 to manage a secure storage area in the flash memory component 3, the secure storage area being controlled with the key K. For instance, data can be written to or read from the secure storage area only using the key K.

By ensuring that the key K is unique to the set comprising the chipset component 2 and flash memory component 3, messages between the chipset component 2 and the flash memory component 3 cannot be replayed with any other flash memory component, even with the same chipset component 2.

The keys that were used with former flash memory components correspond to smaller values of the counter than the current one, and then will no longer be generated by the chipset component 2. As a consequence, data protected with these keys are rendered unusable and therefore, secure storage protected with these keys cannot be cloned.

Embodiments described above prevent a key K chosen by the chipset component 2 from being provisioned and stored in more than one flash memory component. Thus, the method aims to prevent cloning of some data from the flash memory component 3 to another even if both are used with the same chipset component 2.

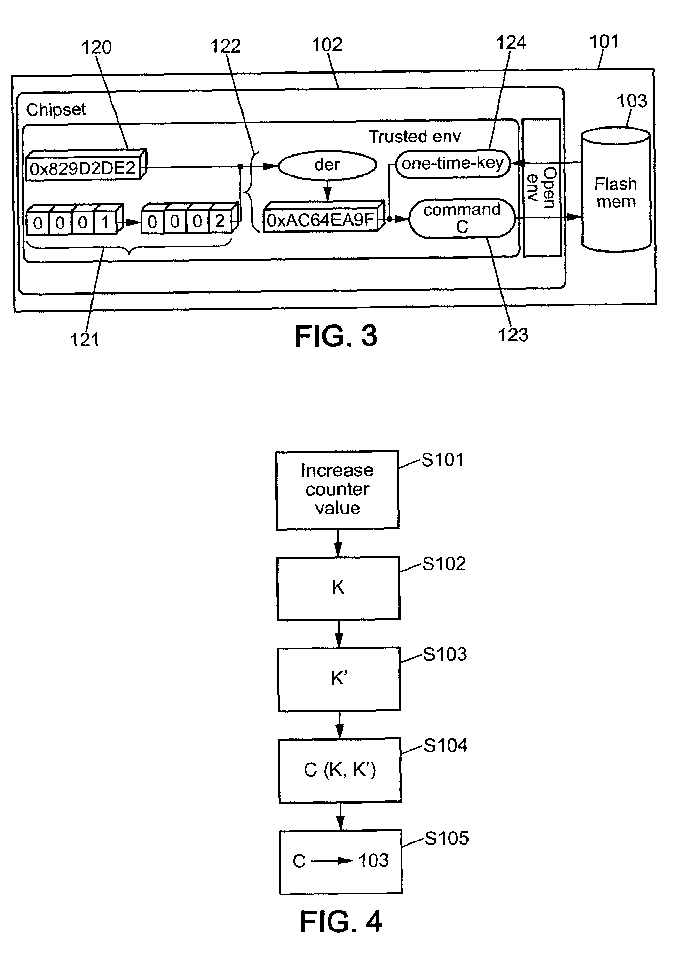

**Fig.3** shows an electronic board 101 according to other embodiments of the invention. The electronic board 101 comprises a chipset component 102 and a flash memory component 103.

The chipset component 102 embeds a hardware unique identifier (ID) and/or key 120, called credentials. The chipset component 102 comprises a monotonic counter block 121, a derivation block 122 and a command block 123.

The flash memory component 103 is configured to randomly choose a one-time-key (challenge) K', and to send the chosen one-time key K' to the chipset component 102.

The chipset component 102 further comprises a one-time key block 124 configured to receive the one-time key K' from the flash memory component 103.

The command block 123 is configured to include, in the provisioning command C, the one-time-key K' received from the flash memory component 103, in such a way that building the provisioning command C requires computing a value that depends both on the one-time-key K' and on the key K, and that the key K cannot be retrieved from the provisioning command C without knowing the one-time key K'.

Thus, in these embodiments, a provisioning command C can be used only once, and does not leak information about the key K.

**Fig.4** shows steps of a method for preventing cloning of a flash memory component, which is executed by the chipset component 102 of Fig.3, for example when a new flash memory component 103 has just been soldered to the electronic board 101.

In step S101, the counter block 121 increases the counter value.

In step S102, the derivation block 122 derives a key K from the chipset credentials and the current value of the counter 121, using a proper cryptographic key derivation function.

In step S103, the one-time key block 124 gets the one-time key K' from the flash memory component 103 and transmits it to the command block 123.

Alternatively, step S103 could happen before step S102 and/or step S101.

In step S104, the command block 123 builds the key provisioning command C for key K and one-time key K'.

In step S105, the command block 123 sends the command C to the flash memory controller of the flask memory component 103.

In these embodiments, as a provisioning command C can be used once only and does not leak information on the key K to entities other than the flash memory component 103 which knows the one-time-key K'. As a consequence, there is no constraint of sending directly the command C to the flash controller from the controlled environment. In case of eavesdropping, the attacker cannot reuse the command C to provision the same key K to another flash memory component, and thus cannot clone it.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in a reference to the plural and vice versa.

A person skilled in the art will readily appreciate that various parameters disclosed in the description may be modified and that various embodiments disclosed may be combined without departing from the scope of the invention.

## Claims

1. Electronic device (1, 101) comprising a chipset component (2, 102) and a flash memory component (3, 103), the said chipset component being associated with an identifier, the said chipset component comprising a monotonic counter (21, 121) and being configured to:
- derive a key (K) from the identifier and a current value of the monotonic counter, by using a cryptographic key derivation function,
- build a provisioning command (C) related to the key,
- send the provisioning command to the flash memory component, and
- use the key to manage a secure storage area in the flash memory component.

2. Electronic device according to claim 1, wherein the chipset component (2, 102) is further configured to increase the counter value before deriving the key (K).

3. Electronic device according to claim 2, wherein the chipset component (2, 102) comprises a single software or hardware function to increase the counter value and derive the key (K).

4. Electronic device according to claim 1, wherein the chipset component (2, 102) is further configured to regenerate the key (K) using the identifier and the current value of the monotonic counter, and to use the regenerated key to build commands to communicate with the flash memory component (3, 103).

5. Electronic device according to claim 1, wherein the chipset component (102) is configured to receive, from the flash memory component (103), a one-time key (K'), the provisioning command (C) being related to the key (K) and the one-time key (K').

6. Method for preventing cloning of a flash memory component comprising a step of soldering a flash memory component (3, 103) to an electronic device (1, 101) comprising a chipset component (2, 102), the said chipset component being associated to an identifier and comprising a monotonic counter,
the method further comprising steps of, at the chipset component:
- deriving a key (K) from the identifier and a current value of the monotonic counter, by using a cryptographic key derivation function,
- building a provisioning command (C) related to the key,
- sending the provisioning command to the flash memory component,
- using the key to manage a secure storage area in the flash memory component.

7. Method according to claim 6, comprising a step of increasing the counter value before deriving the key (K).

8. Method according to claim 6, comprising a step of regenerating the key (K) using the identifier and the current value of the monotonic counter, and using the regenerated key to build commands to communicate with the flash memory component (3, 103).

9. Method according to claim 6, comprising a step of receiving at the chipset component (2, 102), from the flash memory component (3, 103), a one-time key (K'), the provisioning command (C) being related to the key (K) and the one-time key (K').

10. Computer program product comprising a computer readable medium, having thereon a computer program comprising program instructions, the computer program being loadable into a data-processing unit and adapted to cause the data-processing unit to carry out the steps of any of claims 6 to 9 when the computer program is run by the data-processing unit.
